# DEMANDE DE BREVET EUROPEEN

(11) **EP 0 623 486 A1**
(43) Date de publication de la demande: **09.11.1994**
(21) Numéro de dépôt: 94420135.9
(22) Date de dépôt: 29.04.1994
(51) Int. Cl.: B60P 1/54, B60P 1/64, B60P 1/48

(54) **Matériel permettant la manutention de charges lourdes**

(30) Priorité: 06.05.1993 FR 9305793
(71) Demandeur: Boudrot, Charles, F-13003 Marseille (FR)
(72) Inventeur: Boudrot, Charles, F-13003 Marseille (FR)
(74) Mandataire: Dupuis, François

(57) **Abrégé**

Le matériel permet la manutention de charges lourdes, à partir d'un véhicule porteur. Celui-ci reçoit deux flêches (7) disposées de part et d'autre et latéralement sur le porteur, chaque flêche étant articulée sur un mât (8) à l'aide d'un vérin élévateur (11). Les flêches autorisent, par leur partie supérieure, le déplacement de chariots (13) translateurs de charges en étant associés à des moyens porteurs (MP) susceptibles d'assurer le soulèvement de la charge. Les moyens porteurs entourent la charge et comprennent des palonniers (P) récepteurs de moyens de saisie et d'agrippement de ladite charge. Les moyens porteurs sont susceptibles de pivoter à 90° par rapport à leur position de chargement-déchargement sur le porteur pour prendre une position entre les flêches, lors de la circulation à vide du véhicule porteur.

## Description

L'invention se rattache aux secteurs techniques des structures et matériels de chargements et de déchargements de charges lourdes et encombrantes tels que conteneurs, caisses de 10 à 45 pieds, citernes de grande capacité, éléments pré-fabriqués, bateaux de plaisance, ou autres masses et volumes destinés à être transbordés.

L'invention s'applique en particulier au chargement de remorques associées à des véhicules tracteurs.

Les transbordements de charges, tels que par exemple dans la relation wagon/camion, et vice-versa, sont effectués au moyen de portiques ou de chariots élévateurs qui entraînent des investissements très coûteux, tant pour l'achat du matériel que pour le renforcement des terrains sur lesquels les opérations doivent s'effectuer. En considérant les techniques connues utilisées, le but recherché, selon l'invention, était de concevoir un matériel qui soit plus économique, et qui puisse évoluer dans des sites variés, férroviaires, portuaires, industriels... sans aménagement particulier des sols.

Un autre but recherché, selon l'invention, était de concevoir un matériel qui puisse permettre la circulation à vide, sur routes et autoroutes, d'un ensemble tracteur porteur en conformité avec le code de la route.

Un autre but recherché, selon l'invention, était de concevoir un matériel qui offre toute facilité pour la prise en charge, le soulèvement, le transbordement de la charge considérée sur un véhicule porteur.

Selon une première caractéristique, le matériel permettant la manutention de charges lourdes, à partir d'un véhicule porteur, est remarquable en ce que le véhicule porteur comprend deux plans horizontaux étagés dont un plan de chargement, ledit véhicule étant susceptible de recevoir deux flêches identiques, de grande longueur, disposées de part et d'autre et latéralement sur le porteur, chaque flêche étant articulée sur un mât situé dans la partie avant du porteur, lesdites flêches étant articulées et mises en mouvement à l'aide d'un vérin élévateur, et en ce que lesdites flêches ont un profil autorisant, par leur partie supérieure, le déplacement d'un chariot translateur de charges, les chariots se déplaçant sur chacune des flêches étant disposés dans le même plan et étant associés à des moyens porteurs, susceptibles d'assurer le soulèvement de la charge et étant translatés transversalement le long des flêches sous l'action de moyens assurant le déplacement des chariots, lesdits moyens porteurs entourant la charge à soulever comprenant des palonniers récepteurs de moyens de saisie et d'agrippement de ladite charge, et en ce que lesdits moyens porteurs associés au chariot sont susceptibles de pivoter à 90° par rapport à leur position de chargement-déchargement sur le porteur pour prendre une position entre les flêches, lors de la circulation à vide du véhicule porteur, des moyens associés aux flêches autorisant le pivotement desdits moyens porteurs, et leur maintien en position par rapport aux flêches.

Pour fixer l'objet de l'invention illustré d'une manière non limitative aux figures des dessins où :
- la figure 1 est une vue en perspective à caractère schématique illustrant le matériel, selon l'invention, disposé sur la plateforme d'un véhicule porteur,

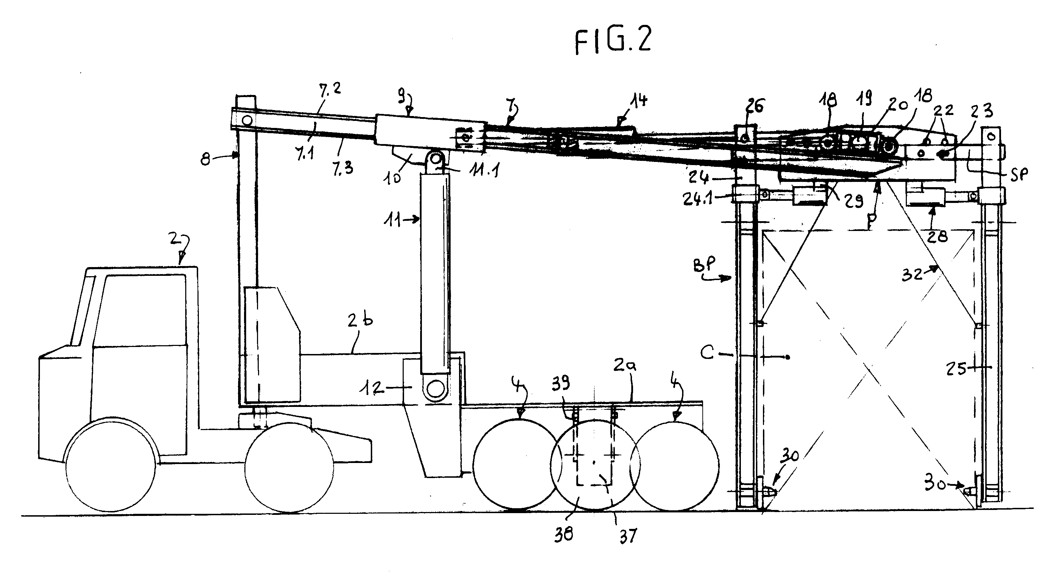

- la figure 2 est une vue de profil et en coupe, au niveau d'un chariot, illustrant la saisie d'une masse en vue de son transbordement sur le véhicule porteur,

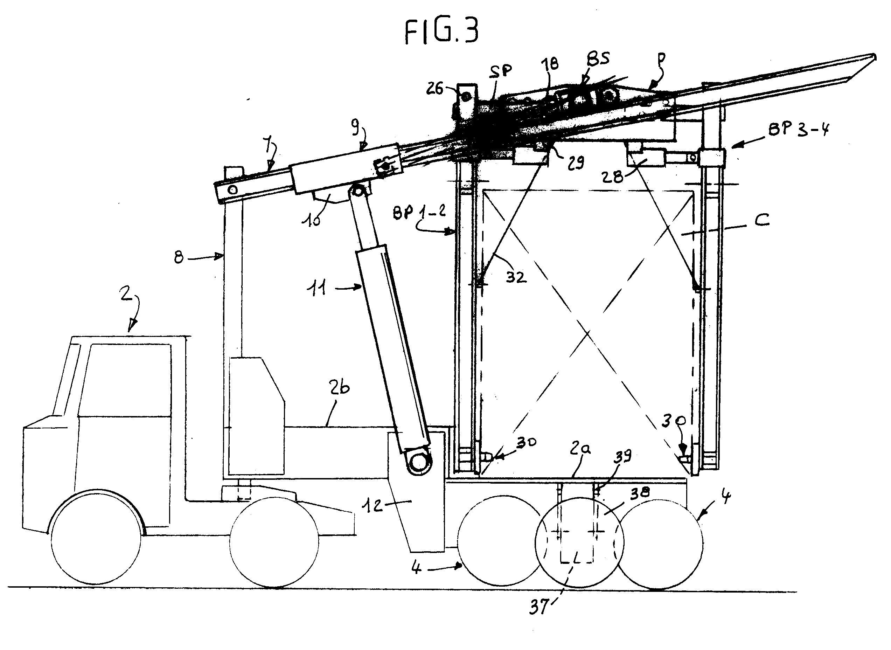

- la figure 3 est une vue, selon la figure 2, selon laquelle la masse est chargée sur le véhicule porteur,
- la figure 4 est une vue de face arrière illustrant ledit matériel sur le véhicule porteur,
- la figure 5 est une vue de face arrière illustrant ledit matériel sur le véhicule porteur en position site,

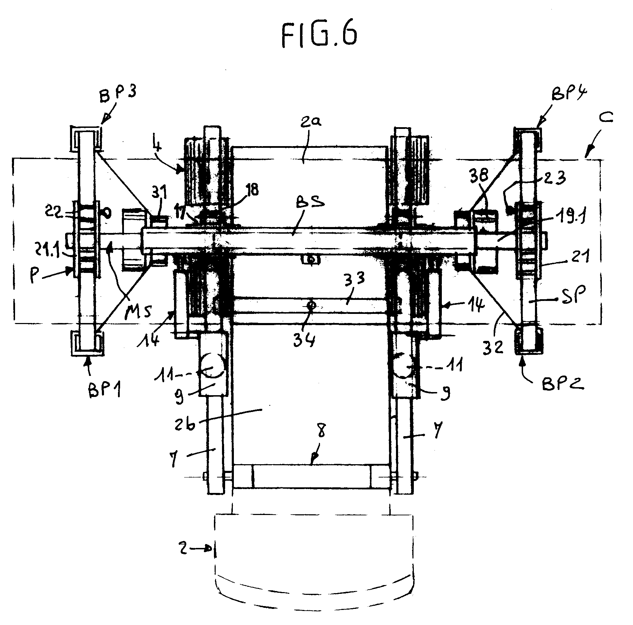

- la figure 6 est une vue de dessus correspondant à la figure 2,
- les figures 7, 8 et 9 sont des vues à caractère schématique illustrant le positionnement et le pivotement des moyens porteurs associés au matériel de levage de charges dans les positions successives chargement-déchargement, puis déplacement à vide du véhicule porteur.

Afin de rendre plus concret l'objet de l'invention, on le décrit maintenant d'une manière non limitative aux figures des dessins.

Le matériel permettant la manutention de charges lourdes, selon l'invention, est référencé dans son ensemble par (1) et est susceptible de s'adapter sur un véhicule porteur (2) de tout type connu avec remorque. Ce véhicule porteur est remarquable en ce qu'il présente, dans sa partie arrière, ou remorque, une structure étagée définissant deux plans horizontaux (2.a - 2.b) successifs. Le plan inférieur (2a), qui se situe à l'arrière du porteur, est établi, selon des dimensions, pour autoriser le positionnement de toute charge transbordée, et notamment conteneur. Le plan étagé supérieur (2b) est susceptible de constituer, par la face de liaison, avec le bord étagé précédent, une zone de butée et de guidage en position de la charge précitée. Ledit plan étagé supérieur (2b) est établi dans une position sensiblement éloignée de la cabine du véhicule porteur pour permettre, dans certaines phases de fonctionnement, le passage des moyens porteurs de la charge en position à vide du véhicule porteur, ainsi qu'il apparaîtra par la suite.

Dans une disposition et mise en oeuvre non limitative, le véhicule porteur présente, sousjacent à la plateforme de réception des charges, des supports d'essieux (3) d'un train de roues (4) réglable en position, ainsi que des béquilles de stabilisation utilisées lors des opérations de chargement.

Le matériel de manutention, selon l'invention, comprend deux flêches (7), identiques, de grande longueur, disposées de part et d'autre et latéralement sur le porteur, chaque flêche étant articulée sur un mât (8) disposé vertical et fixe, ledit mât étant situé dans la partie avant du porteur ou près de l'extrémité avant de la plateforme étagée (2b). L'articulation de chaque flêche sur son mât est obtenue de toute manière appropriée. De manière avantageuse, ces flêches ont un profil en "H" avec un corps (7.1) disposé vertical, et deux plans (7.2 - 7.3) perpendiculaires, supérieur et inférieur, horizontaux, le plan supérieur (7.2) constituant une base de roulement d'un chariot translateur de charges. La largeur du plan supérieur est établie sur une dimension appropriée pour permettre le guidage et le déplacement dudit chariot, ainsi qu'il sera décrit par la suite.

Sur la flêche est disposé, dans un plan sensiblement au dessus des plateformes étagées (2a - 2b), un fourreau (9), de profil complémentaire, s'adaptant sur le corps de la flêche en elle-même, en entourant celle-ci, ledit fourreau présentant, sur sa face de dessous, des consoles (10) en forme de chape, en partie inférieure, autorisant l'articulation de la tige (11.1) d'un vérin élévateur (11). Ledit vérin est fixé par son fût sur un support (12) solidarisé lui-même au châssis du porteur et situé, de préférence latéralement, près de l'extrémité arrière de la plateforme étagée (2b).

La commande des vérins est fournie par un groupe autonome non représenté aux dessins.

Selon une caractéristique importante de l'invention, chacune des flêches est agencée pour permettre le positionnement et le déplacement d'un chariot référencé dans son ensemble par (13). Les chariots sont translatés, le long du profil supérieur (7.2) de chaque flêche, à l'aide de la commande d'un ensemble de vérins (14) disposés en alignement le long de la flêche. Le fût (14.1) de chaque vérin est solidarisé à une attache (15) disposée sur la flêche ou sur le fourreau (9) ou près du mât porteur de la flêche, tandis que la tige (14.2) de chaque vérin est fixée à son extrémité à une attache (16) associée au chariot (13) précité. Le développement de la tige de chaque vérin permet ainsi le déplacement du chariot, le long de la flêche, afin qu'il prenne une première position sensiblement en bout de flêche, pour permettre, par des moyens appropriés, l'agrippement de la charge à soulever et à déplacer, et une seconde position en retrait, de telle sorte que le chariot soit positionné sensiblement au dessus de la plateforme (2.a) formée sur le véhicule porteur. La course en déplacement du chariot est donc préétablie en fonction des contraintes précitées. Les chariots sont associés à des moyens porteurs référencés dans leur ensemble par (MP) susceptibles d'assurer le soulèvement de la charge, et étant translatés transversalement le long des flêches. Les vérins (14), assurant le déplacement des chariots, sont disposés longitudinalement, le long de la flêche, en étant maintenus par tous moyens appropriés.

Les moyens porteurs (MP) de la charge, associés au chariot, comprennent une barre support (BS) de très grande longueur disposée perpendiculaire aux flêches (7), la barre support étant de section carrée ou rectangulaire. Sur les faces latérales de cette barre, sont fixés, par des plaques de liaison (17) appropriées, les galets de roulement (18) constitutifs des chariots. Chaque chariot comprend ainsi deux galets disposés de part et d'autre de la barre. Ces galets sont réalisés en tous matériaux appropriés, compte tenu des contraintes et charges, pour assurer une bonne fiabilité de fonctionnement. La barre support (BS) est creuse intérieurement et est agencée pour recevoir, à chacune de ses extrémités, des moyens supports (MS) réglables en position, et qui sont susceptibles de coopérer avec un palonnier référencé dans son ensemble par (P). On a ainsi deux palonniers disposés de manière symétrique par rapport à la barre support (BS) pour assurer un équilibre pour le soulèvement ou le déchargement des charges. Lesdits palonniers (P) peuvent être rapprochés l'un de l'autre ou écartés en fonction de la charge à soulever, et grâce aux moyens supports (MS) précités. Dans une mise en oeuvre particulière, ces moyens supports (MS) sont établis sous forme de vérins (19), dont le fût est guidé et maintenu par un profilé complémentaire (20), à l'intérieur de la barre support (BS), tandis que la tige du vérin (19.1) considéré est associée à la structure en palonnier (P). La longueur de course de la tige de chaque vérin (19) est établie en respectant les coefficients de sécurité pour éviter tout porte à faux excessif par rapport à la barre support. Il est bien évident que tout autre moyen assurant l'écartement ou le rapprochement des palonniers peut être prévu dans une fonction équivalente.

Chaque palonnier comprend une armature fixe (21) disposée perpendiculaire à l'axe du bras support (BS), en constituant ainsi des extrémités du matériel de manutention.

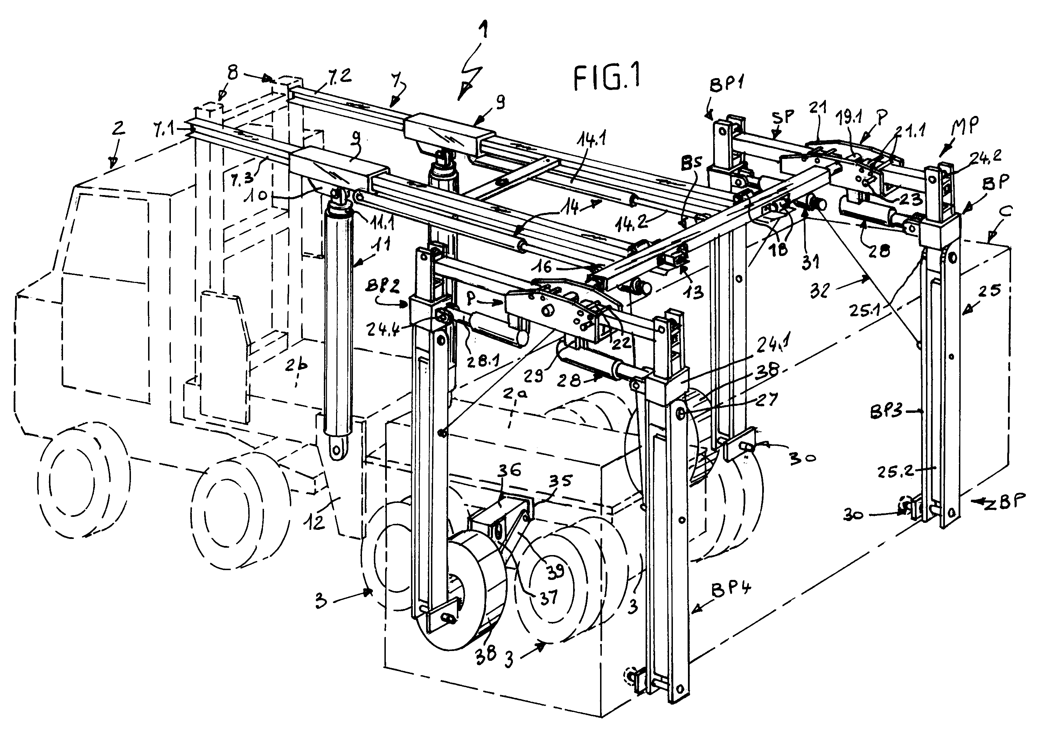

La charge à soulever, de petite ou de grande longueur, de faible ou de grand volume, est donc disposée et centrée sous les palonniers (P). On a représenté, à la figure 1 des dessins, en traits en pointillés, un conteneur (C) de grande longueur.

L'armature fixe (21) de chaque palonnier est établie sous forme d'un berceau profilé en "U", de grande longueur, perpendiculaire au bras porteur (BS), ledit berceau présentant sur ses ailes (21.1) des ouvertures pour le passage et le guidage de la tige des vérins (19) constituant les moyens supports (MS) de réglage en écartement des palonniers. Chaque berceau est agencé pour recevoir, entre ses ailes et son fond, des supports (SP) des bras pinces (BP), le cas échant, réglables en position. Des entretoises (22) de liaison sont prévues entre les ailes des berceaux, et assurent un guidage des supports des bras pinces en évitant tout basculement inapproprié en faisant contre-appui. Il est prévu, en outre, des moyens de verrouillage complémentaires du type goupilles (23) ou équivalent traversant les ailes des berceaux et le corps des supports des bras pinces. Il peut être avantageusement prévu deux positions, l'une en déport maximum des supports des bras pinces, par rapport au berceau, et l'autre en position rentrée. Les extrémités des supports des bras pinces reçoivent les moyens qui sont susceptibles de se fixer et agripper la charge à soulever. Ces moyens peuvent être par exemple des élingues. Dans la réalisation illustrée aux dessins, les moyens susceptibles de se fixer et agripper la charge à soulever sont définis par des bras pinces (BP) articulés et venant se fixer sur la charge (C) à soulever. Plus précisément, ces bras pinces (BP) sont disposés à chaque extrémité du palonnier pour permettre une saisie en quatre points de la charge à soulever. Deux bras pinces (BP1 - BP2) sont disposés près du porteur, d'un côté de la charge, et deux autres bras pinces (BP3 - BP4) sont disposés pour entourer de l'autre côté ladite charge. Ces bras pinces (BP) sont avantageusement réalisés en deux parties, une partie supérieure fixe (24) associée à chaque support de bras pinces disposé dans les berceaux du palonnier, et dans certains cas, une partie inférieure articulée (25) pour permettre, dans certaines phases d'utilisation, le relèvement partiel. Ainsi qu'illustrée aux dessins, la partie supérieure (24) comprend un socle (24.1) de forme, par exemple, carrée, se prolongeant dans sa partie supérieure avec une forme en chape (24.2), dont les branches sont disposées de part et d'autre du support du bras pinces, lesdites branches étant articulées entre elles sur un axe de liaison (26). Ledit socle (24.1) se prolonge dans sa partie inférieure avec une embase (24.3) profilée sur laquelle s'articule la partie inférieure (25) du bras pince. Ce dernier présente, à sa partie supérieure (25.1), une forme en chape en étant articulée sur un axe (27) traversant ladite embase (24.3). Le bras pince est ensuite réalisé et conformé avantageusement selon une forme en "H" (25.2) dont les parois sont parallèles, et en regard de la charge à soulever. Lesdits bras pinces sont destinés à être articulés pour se rapprocher ou s'éloigner de la charge à soulever, tel qu'un conteneur par exemple. Cette articulation est obtenue à l'aide d'un vérin (28) dont le fût est solidarisé fixement par une console (29) ou autre associée au berceau, la tige du vérin (28.1) étant accouplée entre deux ailes (24.4) solidaires du socle de chaque bras pince. Chaque bras pince comprend par ailleurs, en hauteur, sur sa face en regard de la charge à soulever, des moyens (30) susceptibles de se fixer sur la charge. Si cette dernière est du type conteneur ou caisse, on prévoit son agencement dans ses parties haute et basse, avec des coins dénommés "ISO" pour permettre la pénétration et le verrouillage par des moyens complémentaires formés sur les bras pinces. Selon les applications et conditions d'utilisation, les bras pinces (BP1 - BP2) disposés à l'arrière des palonniers, côté porteur, peuvent être animés d'un seul mouvement consistant dans le rapprochement ou l'éloignement par rapport à la charge à soulever, en vue de son agrippement. On a représenté, néanmoins, aux dessins, la faculté d'un relevage de la partie inférieure des bras pinces pour qu'ils prennent une position haute horizontale. Les bras pinces (BP3 - BP4) disposés à l'avant du palonnier sont, eux, automatiquement animés d'un double mouvement pour permettre, d'une part, la saisie de la charge à soulever, et d'autre part, pour pouvoir s'escamoter lors de la présentation du véhicule porteur près de la charge à soulever. En effet, il convient que le véhicule porteur soit approximativement positionné par rapport à ladite charge, lors de la manoeuvre arrière de présentation, pour obtenir un équilibrage. A cet effet, les parties inférieures articulées des bras pinces sont relevées pour prendre une position à l'horizontal. Le relevage est obtenu par exemple et non limitativement à l'aide d'un treuil (31) ou système équivalent. Ledit treuil est fixé sur la barre support (BS) transversale reliant les palonniers, et un câble (32) est attaché à une zone de fixation prévue sur les bras pinces. Le relevage des deux bras pinces en regard est établi de manière à ce qu'il n'y ait pas de gêne particulière pour assurer leur positionnement correct sans entrechoquement.

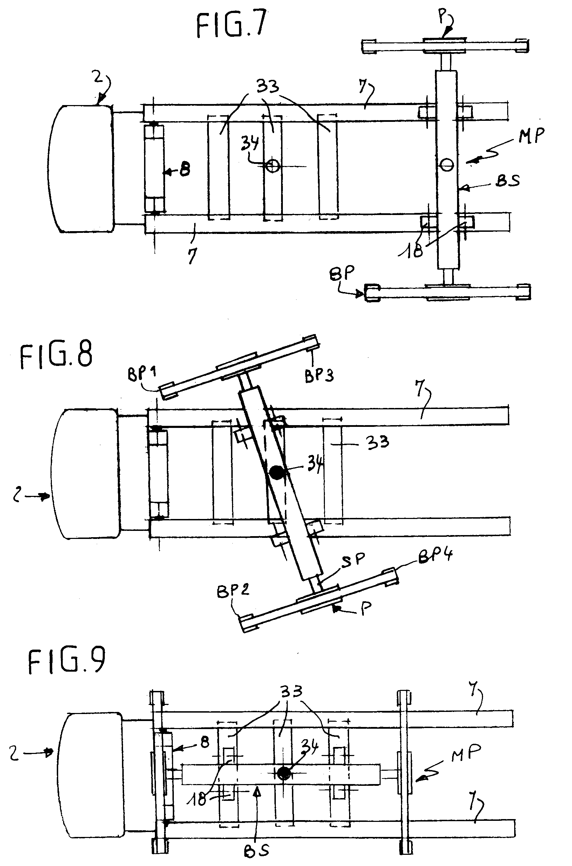

Selon une caractéristique importante de l'invention illustrée aux figures 7, 8 et 9 des dessins, les moyens porteurs (MP) associés aux chariots (13) sont susceptibles d'être pivotés dans un plan de 90° pour être disposés entre les flêches (7), et dans l'axe du véhicule porteur, pour permettre le déplacement de ce dernier, afin qu'il soit conforme au code de la route. Pour assurer cette mise en oeuvre, il est prévu de rapporter ou de disposer, entre les flêches (7), des barres entretoises complémentaires (33) assurant une rigidification de l'ensemble. Ces barres entretoises sont disposées en nombre approprié et constituent des plans d'appui des moyens porteurs (MP) une fois pivotées. Ces barres entretoises sont fixées entre les flêches en étant rapportées et liées auxdites flêches par tous éléments de fixation nécessaires. D'une manière importante, l'une des entretoises disposées transversalement entre les flêches est agencée pour présenter un pivot (34) autour duquel s'articule un moyen complémentaire disposé sur la partie inférieure du moyen porteur (MP). Cette liaison est de tout type approprié. Très avantageusement, le position de cette articulation est établi de sorte que, lors du pivotement des moyens porteurs (MP), l'un des palonniers (P) puisse s'insérer dans l'espace formé à l'extrémité arrière des flêches et la face arrière de la cabine du véhicule tracteur. L'autre palonnier peut se situer en fonction de la longueur des flêches (7), soit à leur extrémité, les bras pinces pouvant se trouver alors dans le prolongement des flêches, soit dans un plan intermédiaire le long des flêches, les bras pinces étant alors rabattus et passant sous les flêches.

Compte tenu du poids des moyens porteurs, le matériel comprend tous moyens complémentaires pour assurer en toute sécurité le support de la charge précitée. Le mode de pivotement des moyens porteurs est établi à l'aide de moyens connus, tels que câbles, associés avec un treuil, ou tout simplement avec une commande manuelle à l'aide d'un levier.

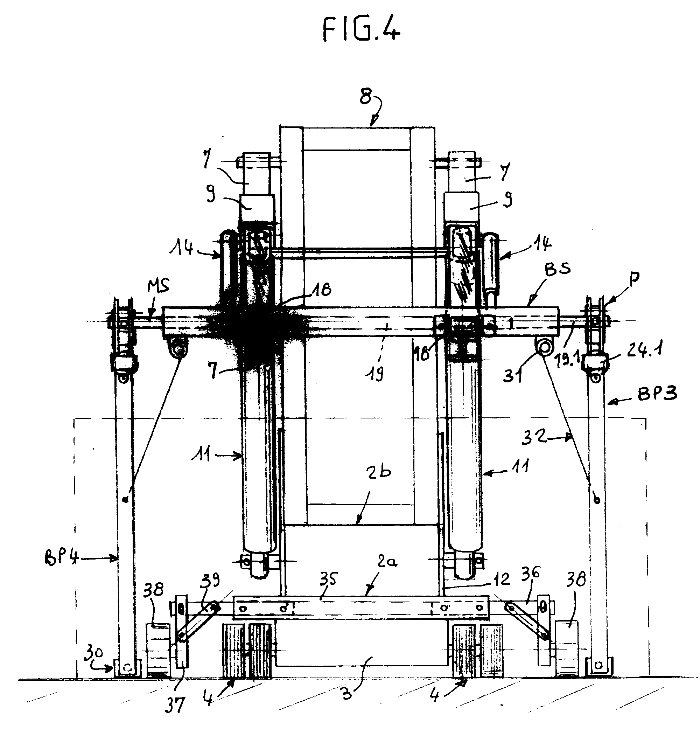

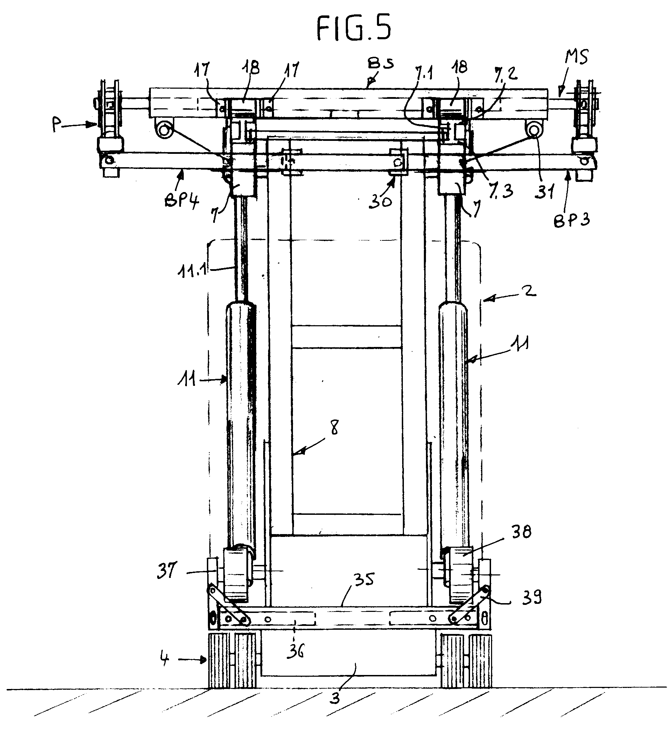

Selon une disposition complémentaire de l'invention, qui apparaît en particulier aux figures 4 et 5, la stabilité du véhicule porteur est complétée par l'utilisation de moyens complémentaires. Transversalement au châssis du véhicule porteur, ce dernier comprend une traverse profilée (35) débouchant près ou au dessus des trains de roues (4) classiques du véhicule porteur. A ses extrémités, la traverse reçoit deux barres de prolongement (36) horizontales, de profil complémentaire, pouvant coulisser, d'une manière contrôlée et guidée, avec axe de verrouillage, lesdites barres de prolongement recevant à leurs extrémités des bras (37) articulés, susceptibles de recevoir eux-mêmes des roues (38) d'appui au sol. Ces bras sont articulés par rapport aux barres transversales à l'aide de biellettes (39) fixées par leurs extrémités à chaque barre transversale et à chaque bras. L'extrémité des barres de prolongement forme chape pour permettre la liaison et le pivotement des bras précités. Le relevage desdits bras s'effectue, soit à l'aide de moyens de type vérin, soit à l'aide de moyens mécaniques. En situation, ainsi qu'il apparaît aux dessins, le chargement ou le déchargement représenté figure 4, les roues (38) sont en appui au sol et les bras (37) sont orientés vers le bas, les barres transversales étant développées. En position route du véhicule porteur, les roues (38) sont relevées et situées dans un plan au dessus du train de roues (4) par suite du relevage des bras (37) précités, et repliement des barres transversales à l'intérieur de la traverse tubulaire. Cet aménagement et cette disposition sont importants car ils permettent d'obtenir, d'une part une fonction de stabilité complémentaire, et d'autre part un roulement du véhicule porteur pour affiner le positionnement de celui-ci autour de la charge à transborder. Le déport et l'appui des roues (38) au sol augmentent le polygone de sustentation, en permettant une meilleure répartition des charges. Il peut être envisagé de disposer, à l'avant et à l'arrière de la plateforme du véhicule porteur, deux ensembles identiques.

Le fonctionnement est donc le suivant. Lorsqu'une charge est à transborder, la charge étant préalablement au sol, le véhicule porteur vient en marche arrière, à proximité de ladite charge. Si le matériel comprend un système de soulèvement de charge par des bras pinces du type précité, les bras pinces avant ont été relevés à l'horizontal pour faciliter le positionnement des moyens porteurs autour de la charge à transborder. La charge étant ensuite située sous les moyens porteurs, les palonniers sont réglés en position d'écartement ou d'éloignement en vue du meilleur équilibrage. Cette opération étant effectuée, les bras pinces avant sont mis en place par basculement pour venir en regard des bras pinces arrières. L'ensemble des bras pinces est alors articulé pour permettre le pinçage et l'agrippement de la charge. Lorsque cette opération est effectuée, les vérins commandant le relevage en hauteur des flêches se développent et assurent leur relevage entraînant de ce fait celui de la charge. Lorsque les flêches sont à hauteur désirée, permettant un dégagement en hauteur de la charge par rapport au porteur, les vérins commandant les chariots de translation sont sollicités entraînant ainsi, outre les chariots, mais également le moyen porteur (MP) associé à ces derniers. De ce fait, la charge, toujours maintenue par les bras pinces, est déplacée vers l'arrière jusqu'à être positionnée dans un plan sensiblement au-dessus de la plateforme réceptrice de la charge.

On procède alors à l'abaissement des flèches, jusqu'à ce que la charge soit en appui sur la plateforme. Cette opération étant effectuée, les bras pinces peuvent être ou non sollicités pour libérer la charge qui est convenablement centrée sur le porteur. Lorsque le transport de la charge a été effectué sur le lieu souhaité, on procède alors au déchargement, selon un cycle opératoire inverse.

Lorsque le véhicule porteur doit prendre la position route, il convient alors de positionner convenablement les moyens porteurs entre les flêches (7) précitées, et dans un plan axial correspondant à celui du véhicule porteur. A cet effet, on procède, par la commande hydraulique ou pneumatique des vérins (14), au déplacement transversal du moyen porteur, le long des flêches, grâce au roulement des chariots (13) sur lesdites flêches, jusqu'à venir en regard du point pivot d'articulation formé à partir de l'une des entretoises disposées entre les flêches précitées. Ces entretoises ont préalablement été positionnées par l'opérateur pour mettre à niveau les deux flêches. L'opérateur procède ensuite, après positionnement des moyens d'articulation formés sur les moyens porteurs (MP) et l'entretoise, au pivotement desdits moyens porteurs (MP). Cette opération s'effectue de toute manière appropriée à l'aide de levier ou autre moyen de commande. Les moyens porteurs (MP) viennent alors, comme illustrés aux dessins, entre les deux flêches, le palonnier arrière étant placé entre la plateforme et la cabine arrière du véhicule porteur, et le palonnier avant, soit dans le prolongement des flêches, soit sensiblement en superposition avec les bras pinces avant relevés.

Les avantages ressortent bien de l'invention. On souligne en particulier la conception nouvelle et pratique de ce matériel, parfaitement adapté pour le transbordement de charges de l'ordre de 10 à 45 pieds, ainsi qu'une manipulation aisée de ses moyens constitutifs. On souligne également la possibilité de déplacement du véhicule porteur en toute conformité avec le code de la route, grâce au pivotement contrôlé des moyens porteurs. On souligne également la stabilité accrue du véhicule porteur grâce à l'utilisation des ensembles complémentaires de stabilité.

## Revendications

**-1-** Matériel permettant la manutention de charges lourdes, à partir d'un véhicule porteur, caractérisé en ce que le véhicule porteur (2) comprend deux plans horizontaux (2a - 2b) étagés dont un plan de chargement (2a), ledit véhicule étant susceptible de recevoir deux flêches (7) identiques, de grande longueur, disposées de part et d'autre et latéralement sur le porteur, chaque flêche étant articulée sur un mât (8) situé dans la partie avant du porteur, lesdites flêches étant articulées et mises en mouvement à l'aide d'un vérin élévateur (11), et en ce que lesdites flêches ont un profil autorisant, par leur partie supérieure, le déplacement d'un chariot (13) translateur de charges, les chariots (13) se déplaçant sur chacune des flêches étant disposés dans le même plan, et étant associés à' des moyens porteurs (MP) susceptibles d'assurer le soulèvement de la charge et étant translatés transversalement le long des flêches sous l'action de moyens (14) assurant le déplacement des chariots, lesdits moyens porteurs entourant la charge à soulever, comprenant des palonniers (P) récepteurs de moyens de saisie et d'agrippement de ladite charge, et en ce que lesdits moyens porteurs associés aux chariots sont susceptibles de pivoter à 90° par rapport à leur position de chargement-déchargement sur le porteur pour prendre une position entre les flêches, lors de la circulation à vide du véhicule porteur, des moyens associés aux flêches autorisant le pivotement desdits moyens porteurs, et leur maintien en position par rapport aux flêches.

**-2-** Matériel, selon la revendication 1, caractérisé en ce que les flêches (7) ont un profil en "H" (7.1) vertical, avec deux plans (7.2 - 7.3) perpendiculaires, supérieur et inférieur, horizontaux, le plan supérieur (7.2) constituant une base de roulement des chariots (13) translateurs de charges.

**-3-** Matériel, selon l'une quelconque des revendications 1 et 2, caractérisé en ce que sur chaque flêche est disposé, dans un plan au dessus des plateformes étagées (2a - 2b), un fourreau (9) de profil complémentaire, s'adaptant sur le corps de chaque flêche, ledit fourreau présentant sur sa face de dessous des consoles en forme de chape, autorisant l'articulation de la tige (11.1) du vérin élévateur (11), dont le fût est fixé sur un support (12) associé au châssis du véhicule porteur.

**-4-** Matériel, selon la revendication 2, caractérisé en ce que les' chariots (13) sont translatés le long du profil supérieur (7.2) de chaque flêche, à l'aide de la commande d'un ensemble de vérins (14) disposés en alignement le long de chaque flêche, le fût (14.1) de chaque vérin étant solidarisé directement ou indirectement sur la flêche, tandis que la tige (14.2) est fixée à une attache (16) associée aux chariots (13).

**-5-** Matériel, selon la revendication 1, caractérisé en ce que les moyens porteurs (MP) de la charge, associés aux chariots, comprennent une barre support (BS) de grande longueur, disposée perpendiculaire aux flêches (7), ladite barre support recevant à fixation les moyens de roulement (18) desdits chariots, et en ce que la barre support (BS), creuse intérieurement, est agencée pour recevoir, à chacune de ses extrémités, des moyens supports (MS) réglables en position, susceptibles de coopérer chacun avec une structure en palonnier (P) réglable en position.

**-6-** Matériel, selon la revendication 5, caractérisé en ce que les moyens supports (MS) comprennent des vérins (19) dont le fût est guidé et maintenu par un profilé complémentaire (20) disposé à l'intérieur de la barre support (BS), la tige des vérins étant associée à la structure en palonnier (P).

**-7-** Matériel, selon l'une quelconque des revendications 5 et 6, caractérisé en ce que chaque palonnier (P) comprend une armature fixe (21) perpendiculaire à l'axe du bras support (BS) constituant les extrémités du matériel de manutention, et en ce que ladite armature fixe (21) est établie sous forme d'un berceau profilé en "U", perpendiculaire à la barre support (BS), ledit berceau étant susceptible de recevoir des supports (SP) des bras pinces (BP) réglables en position pour assurer l'agrippement de la charge à soulever.

**-8-** Matériel, selon la revendication 7, caractérisé en ce que ledit berceau présente sur ses ailes (21.1) des ouvertures pour le passage et le guidage des tiges de vérin (19) constituant les moyens support (MS) de réglage en écartement des palonniers, chaque berceau étant agencé pour recevoir entre ses ailes et son fond des supports (SP) réglables en position de bras pinces (BP), des moyens de liaison (22) assurant un guidage desdits supports (SP) des moyens de verrouillage (23) assurant leur positionnement.

**-9-** Matériel, selon l'une quelconque des revendications 7 et 8, caractérisé en ce que les bras pinces (BP) sont disposés à chaque extrémité des palonniers pour autoriser la saisie en plusieurs points de la charge à soulever, lesdits bras pinces (BP) étant réalisés en deux parties, une partie supérieure fixe (24) associée à chaque support. de bras pinces et une partie inférieure articulée pour permettre le relevage partiel des bras pinces.

**-10-** Matériel, selon la revendication 9, caractérisé en ce que les bras pinces (BP) sont articulés par rapport à l'armature fixe du palonnier, pour permettre par rapprochement ou écartement l'agrippement de la charge à soulever.

**-11-** Matériel, selon les revendications 9 et 10 ensemble, caractérisé en ce que les bras pinces (BP) comprennent dans leur partie supérieure (24) un socle (24.1) se prolongeant dans sa partie supérieure avec une forme en chape (24,2) dont les branches sont disposées de part et d'autre du support du bras pince, en étant articulées par un axe de liaison (26), ledit socle (24.1) présentant, dans sa partie inférieure, une embase (24.3), à partir de laquelle s'articule la partie inférieure (25) du bras pince, et en ce que l'articulation du bras pince dans son ensemble est obtenue à l'aide de vérins (28) dont le fût est solidarisé à l'armature du palonnnier, et dont la tige est solidarisée au socle (24.1).

**-12-** Matériel, selon la revendication 11, caractérisé en ce que la partie inférieure de chaque bras pince présente une forme en "H" (25.2) recevant, à hauteur appropriée, des moyens (30) susceptibles de se fixer sur la charge.

**-13-** Matériel, selon la revendication 1, caractérisé en ce que les moyens porteurs (MP) associés aux chariots (13) sont susceptibles d'être pivotés dans un plan de 90° pour être disposés entre les flêches (7) dans l'axe du véhicule porteur, lesdites flêches recevant des barres entretoises complémentaires (33), par tous moyens de liaison appropriés, l'une desdites barres entretoises recevant un pivot (34) autour duquel s'articule un moyen complémentaire disposé sur la partie inférieure des moyens porteurs (MP).

**-14-** Matériel, selon la revendication 13, caractérisé en position à vide du véhicule porteur, l'un des palonniers des moyens porteurs (MP) est disposé entre l'arrière de la plateforme et la cabine du véhicule, l'autre palonnier étant situé, soit à l'extrémité des flêches, les bras pinces étant dans le prolongement de celles-ci, soit dans un plan intermédiaire le long des flêches, les bras pinces étant rabattus et passant sous les flêches.

**-15-** Matériel, selon la revendication 1, caractérisé en ce que le châssis du véhicule porteur comprend une ou plusieurs traverses (35) débouchant au dessus des trains de roues des véhicules porteurs, ladite traverse présentant à ses extrémités deux barres de prolongement (36) horizontales, coulissantes, d'une manière contrôlée et guidée, avec axe de verrouillage, lesdites barres de prolongement recevant à leurs extrémités des bras (37) articulés recevant des roues (38) d'appui au sol, lesdits bras étant articulés à l'aide de biellettes (39).

**-16-** Matériel, selon la revendication 15, caractérisé en ce que l'extrémité des barres de prolongement (36) forme chape pour autoriser la liaison et le pivotement des bras (37) précités, le relevage desdits bras s'effectuant par tous moyens appropriés.
